(19) Europäisches Patentamt

European Patent Office

Office européen des brevets

(11) **EP 1 014 123 A2**

(12) **EUROPEAN PATENT APPLICATION**

(43) Date of publication:
28.06.2000 Bulletin 2000/26

(51) Int. Cl.[7]: **G02B 6/16**

(21) Application number: 99125281.8

(22) Date of filing: 18.12.1999

(84) Designated Contracting States:
**AT BE CH CY DE DK ES FI FR GB GR IE IT LI LU MC NL PT SE**
Designated Extension States:
**AL LT LV MK RO SI**

(30) Priority: 21.12.1998 IT TO981063

(71) Applicant:
**OTC Optical Technologies Center**
**10148 Torino (IT)**

(72) Inventors:
• **Boschis, Laura**
**10040 Almese (Torino) (IT)**
• **Rossotto, Oriana**
**10040 Almese (Torino) (IT)**
• **Luigi Tallone**
**12034 Paesana (Cuneo) (IT)**

(74) Representative:
**Riederer Freiherr von Paar zu Schönau, Anton Lederer, Keller & Riederer,**
**Postfach 26 64**
**84010 Landshut (DE)**

(54) **An optical fibre bragg grating device with passive compensation of temperature**

(57) An optical fibre Bragg grating device with passive compensation of temperature comprises a grating (2) manufactured on a conventional optical fibre for telecommunications (1) and having a period such that the mode guided by the core (1A) of the fibre (1) is coupled to the higher order modes of the cladding (1B), and a support (3) on which the fibre length (1) is fixed. The compensation is obtained by making the support (3) in a material whose coefficient of thermal expansion is such as to compensate for the shift of the spectral peak of the grating due to temperature variations.

Fig. 1

EP 1 014 123 A2

## Description

This invention relates to optical waveguide components and in particular concerns an optical fibre Bragg grating device that is made temperature-insensitive in a passive way (passive compensation of temperature).

In sensor field and in optical telecommunications increasing interest is given to long period optical fibre Bragg gratings, in which a mode guided in the fibre core is coupled to modes propagating in the cladding. In optical telecommunications, long period gratings are used for instance in band rejection filters or in gain equalisers for optical amplifiers. In contrast to short period gratings, they do not reflect backwards the resonance wavelength.

The conventional long period gratings have a period of the order of some hundred micrometers and couple the mode guided by the core to the first modes of the cladding. These gratings are however strongly sensitive to temperature and, as the temperature varies, they exhibit spectral peak shifts even higher than 0,1 nm $^\circ$C$^{-1}$. Hence their use in applications other than those which exploit just this sensitivity, may originate problems, unless temperature compensation techniques or special mounting schemes are adopted: yet this is undesired from cost, size, and reliability standpoints.

Long period gratings with a period of some tens of micrometers (typically 30 to 40 $\mu$m) have also been proposed, that couple the mode guided by the core to the higher modes of the cladding and have a much lower dependence on the temperature (typically, an order of magnitude lower than the others). An example of these gratings is described in the article "Temperature-insensitive and strain-insensitive long period grating sensors for smart structure", by V. Bhatia et alii, Optical Engineering, Vol. 36, No. 7, July 1997, pp. 1872 and ff. For some applications, however, such as the gain equalisation in amplifiers, the temperature sensitivity is still too high.

In the paper "Temperature-insensitive long-period fiber gratings" by J. B. Judkins et alii, presented at the OFC '96 Conference, San Jose (California, USA), February 25 to March 1, 1996, Document PD1, long period fibre gratings are described in which the temperature sensitivity is practically eliminated by the use of fibres having a particular refraction index profile. The use of special fibres clearly makes the devices more expensive and causes coupling losses with lines made of conventional optical fibres for telecommunications.

The term "conventional optical fibre for telecommunications" or, simply, "conventional optical fibre", denotes, as known, a single mode fibre with step refractive index profile, made of germanium-doped silica and optimised for the transmission of signals at a wavelength in the so-called second transmission window (at about 1300 nm).

According to this invention, a grating device is instead provided, wherein a grating is used with such a long period as to generate a coupling between a guided mode in the fibre core and the higher modes of the cladding and in which the temperature dependence is eliminated without the need of resorting to ad hoc fibres.

The invention exploits the high sensitivity of these gratings to tensile stresses, and in particular the fact that the effect of those stresses is opposed to that of the temperature, in the sense that the application of a tensile stress causes the shift of the spectral peaks of the grating towards the lower wavelengths, whilst a temperature increase, causes a shift towards the higher wavelengths.

Thus, according to the invention, a long period Bragg grating device is provided that comprises a grating made in a conventional optical fibre for telecommunications and a support element to which the grating is fixed, wherein said support element is an element of a material whose thermal expansion coefficient is such as to compensate for the peak shift due to temperature variations within a working temperature interval of the same grating.

The choice of the material for the support is bound to the type of fibre used and must obviously take into account the characteristics of the strain of the fibre due to the tensile stresses resulting from the thermal expansion of the support.

Using gratings manufactured in conventional silica fibres (possibly hydrogenated to enhance their photosensitivity) is advantageous in that they do not give rise to coupling losses with the transmission lines of a system which, too, are made of silica fibres. In these gratings, considering by way of an example a period of 40 $\mu$m, the coefficient $\delta_t$ of the spectral peak shift due to temperature variations is $\delta_t \approx 0.004$ nm $^\circ$C$^{-1}$, and the coefficient $\delta_s$ of the peak shift due to a tensile stress is $\delta_s \approx 2,9153$nm $\cdot$ N$^{-1}$.

In this case, materials suitable for a support element are borosilicate glasses with a high silica content, such as the glasses known in trade as Pyrex$^\circledR$, that have a thermal expansion coefficient of the order of 5.5 $\cdot$ 10$^{-6}$ $^\circ$C$^{-1}$.

The sign "-" for $\delta_s$ denotes that the shift due to tensile stresses is opposed to that due to temperature: in particular, as the temperature increases, the peaks shift towards the higher wavelengths and as the tensile stress increases, they shift towards lower wavelengths. These glasses also offer the advantage of a very low price.

In general, if F is the tensile stress to be applied in order to compensate a temperature variation $\Delta t$, the relation $F \cdot \delta_s = \delta_t \, \Delta t$ should apply. On the other hand, if $\alpha$ is the thermal expansion coefficient of the support, E the Young module of the fibre, A the cross-sectional area of the fibre, also relation $F = \alpha \cdot \Delta t \cdot A \cdot E$ applies (disregarding possible proportionality factors bound to the measurement units adopted). Thus for the support element a material must be chosen with such a thermal expansion coefficient $\alpha$ that

$$\alpha \cdot \delta_s \cdot A \cdot E = \delta_t \qquad (1)$$

It must be also recalled that $\delta_t$ is a function of the grating period: considering that a material whose thermal expansion coefficient fully satisfies (1) may not be available, it is still possible to choose the period of the grating in such a way that the value of $\delta_t$ allows satisfying relation (1), once a material with a satisfactory thermal expansion coefficient has been found. The position of the spectral peaks, which depends on the period and the total diameter (core and cladding) of the fibre, may be then adjusted by submitting the fibre to chemical etching so as to refine the diameter, as is customary during the writing of long period gratings.

It must also be noted that relation (1) assumes that the variations of $\delta_s$ as a function of the grating period variations are negligible in regard to those of $\delta_t$, and it does not take into account the thermal expansion of the fibre (that in turn is about one order of magnitude smaller than that of the Pyrex® glasses). It is possible to take into account this second factor by adding an appropriate corrective term to relation (1).

It is also worth noting that the presence of a support element to which the grating is to be fixed does not cause any additional complexity, since fixing the grating to a support is in any case required when mounting the grating into a module.

The grating is fixed to the support for instance by gluing it at both ends. The glue must be a hard glue, such as to withstand the stresses induced on the fibre by the thermal expansion/shrinkage of the fibre and the support. A glue that has proven suitable for this purpose is that produced and sold under the name "glue for ceramic fibres" by the firm Dual Phoenix, of Brescia (Italy).

If the grating is fixed to the support at ambient temperature, it will have to be submitted to a certain pre-stress, so as to be able to absorb also the shrinkage of the support due to a temperature decrease. A pre-stress of a few hundredths of a Newton will be enough.

For further clarification reference may be made to the accompanying drawings, in which:

- Figs. 1 and 2 are schematic perspective and end views, respectively, of the device.
- Figs. 3 and 4 are diagrams comparing the performance of the device according to the invention with the performance of an isolated grating.

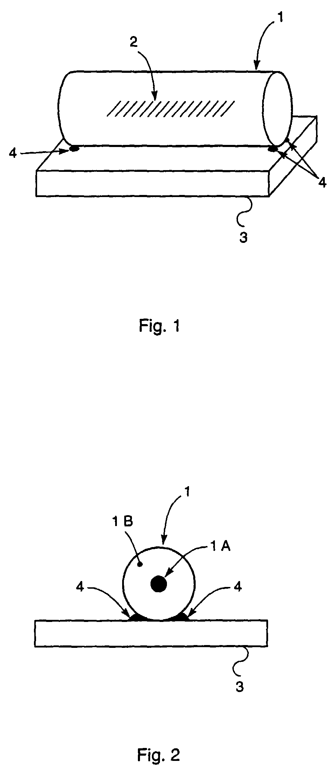

In Figs. 1 and 2, reference 1 denotes the length of a conventional optical fibre into which the grating 2 (shown through dashed line in Fig.1) has been written, and 1A and 1B indicate the core and the cladding of the fibre 1, respectively. The latter is glued on a chip 3 of borosilicate glass with high silica content, in particular a glass known in trade under the name of Pyrex®. Reference 4 indicates the glue.

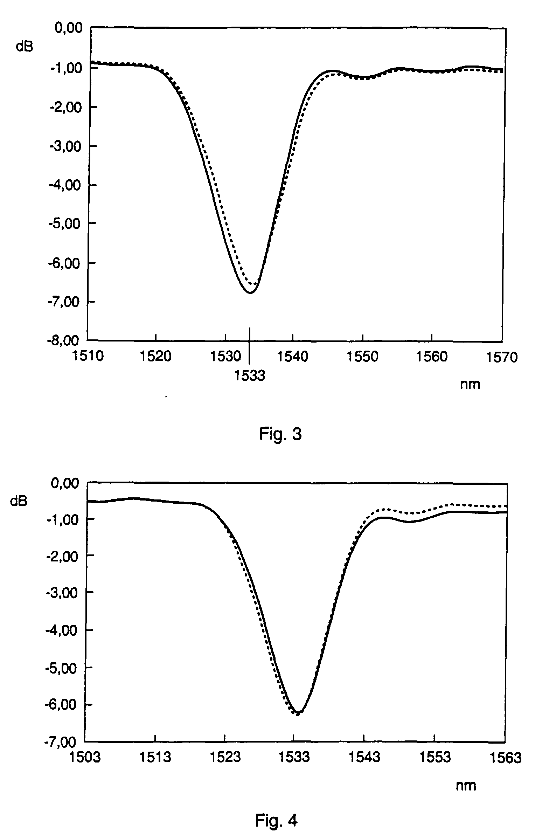

Figs. 3 and 4 illustrate the spectrum of a long period grating, of the type described in the above-cited article by V. Bhatia et alii, used in a conventional manner (i.e. without being fixed to a of Pyrex® support), and the spectrum of the same grating mounted on the Pyrex® support, respectively. For both gratings, the spectrum is the one obtained with a 40 µm period and is shown at a temperature of 20 °C (solid line) and 100 °C (dashed line).

These diagrams have been derived from experimental data. As can be seen, the invention actually allows making the grating practically temperature-insensitive. Fig. 4 shows that by the use of Pyrex® glass the compensation of the shift due to a temperature increase from 20 to 100 °C has been slightly in excess, and that at 100 °C the spectrum is slightly shifted towards the lower wavelengths as compared to the one at 20 °C. Through a slight reduction of the period it is possible to achieve a practically complete overlapping.

It is evident that what described above is only given as a non-limiting example and that variations and modifications are possible without departing from the scope of this invention.

**Claims**

1. Optical fibre Bragg grating device, comprising a length of a single mode optical fibre (1), bearing a grating (2) of the type in which the mode guided by the core (1A) couples to the higher order modes of the cladding (1B), and a support (3) on which the fibre length (1) is fixed, characterised in that the support is an element of a material with a thermal expansion coefficient such as to induce into the grating (2), in the presence of variations of the temperature of the environment in which the device operates with respect to an optimum temperature, tensile stresses such as to substantially compensate for the spectral peak shifts of the grating (2) due to such temperature variations,

2. Device according to claim 1, characterised in that the fibre (1) is a silica fibre and said support is a chip of a borosilicate glass with high silica content.

3. Device according to claim 2, characterised in that said support is a chip of Pyrex® glass.

4. Device according to claims 1 to 3, characterised in that said fibre length (1) is fixed on the support in such a way that, at said optimum temperature, it is submitted to a pre-stress.

Fig. 1

Fig. 2

Fig. 3

Fig. 4